# EUROPÄISCHE PATENTSCHRIFT

(11) **EP 4 140 271 B1**
(45) Veröffentlichungstag und Bekanntmachung des Hinweises auf die Patenterteilung: **02.10.2024**
(21) Anmeldenummer: 22192075.4
(22) Anmeldetag: 25.08.2022
(51) Int. Cl.: A01B 63/22, A01B 63/04, B62D 21/11, A01B 51/04, B62D 21/15

(54) **LANDWIRTSCHAFTLICHE BODENBEARBEITUNGSMASCHINE MIT TRANSPORTFAHRWERK**
AGRICULTURAL SOIL WORKING MACHINE WITH TRANSPORT GEAR
MACHINE AGRICOLE DE TRAITEMENT DU SOL POURVUE DE CHÂSSIS DE TRANSPORT

(30) Priorität: 26.08.2021 DE 102021122172
(43) Veröffentlichungstag der Anmeldung: 01.03.2023
(73) Patentinhaber: Pöttinger Landtechnik GmbH, 4710 Grieskirchen (AT)
(72) Erfinder: BERGER, Thomas, 4710 Grieskirchen (AT); MEINDLHUMER, Wilhelm, 4710 Grieskirchen (AT)
(74) Vertreter: Thoma, Michael

(56) Entgegenhaltungen:
- EP-A1- 3 357 324
- DE-A1- 102005 001 412
- DE-A1- 2 440 655
- US-A1- 2006 191 695

## Beschreibung

Die vorliegende Erfindung betrifft landwirtschaftliche Bodenbearbeitungsmaschinen, insbesondere in Form von Säkombinationen, zum Anbau an einen Schlepper, mit einem Transportfahrwerk, welches einen Anbauträger zum Anbau an die Bodenbearbeitungsmaschine sowie zumindest einen Radträger, der zumindest ein Fahrwerksrad trägt, aufweist.

Solche landwirtschaftlichen Bodenbearbeitungsmaschinen sind beispielsweise aus den Schriften US 2006/0191695 A1 und DE 24 40 655 A1 bekannt. Ferner zeigt die Schrift DE 10 2005 001 412 A1 einen Erntevorsatz für einen Mähdrescher, an den für den Straßentransport zur Gewichtsentlastung ein Transportfahrwerk mit einem einlenkbaren Abstützrad anbaubar ist, das durch ein Federbein einfedern kann.

Für an Schlepper anbaubare Bodenbearbeitungsmaschinen wie Säkombinationen, die Sä- und Bodenbearbeitungswerkzeuge umfassen können, gibt es Tarnsportfahrwerke, die für den Straßentransport an die Maschine angekoppelt bzw. angebaut werden und für die Feldbearbeitung abgekoppelt und am Feldrand geparkt werden können. Für die Feldbearbeitung stützt sich die Bodenbearbeitungsmaschine über die Arbeitswerkzeuge am Boden ab, wobei auch der Schlepper über eine Dreipunktanlenkung mit Ober- und Unterlenkern zumindest einen Teil der Gewichtskraft der Bodenbearbeitungsmaschine tragen kann. Für den Straßentransport wird zumindest ein Teil des Gewichts über das angebaute Transportfahrwerk am Boden abgestützt, sodass die Bodenbearbeitungswerkzeuge, wie beispielsweise Grubber, Scharscheiben, Eggenzinken, Saatgutableger, Säschare, Andrückwalzen und dergleichen ausgehoben sind, wobei auch hier ein Teil des Maschinengewichts am Schlepper abgestützt sein kann. Solche anbaubaren Transportfahrwerke können nicht nur für Sämaschinen, sondern auch für andere Bodenbearbeitungsmaschinen wie Düngemittelausbringer oder andere Kulturpflegemaschinen wie Rollhacken- oder Striegelmaschinen sinnvoll sein, um das Maschinengewicht verteilt abzustützen und ein stabiles Fahrverhalten im Straßentransport zu erzielen.

Die bisherigen Transportfahrwerke werden üblicherweise starr am Maschinenrahmen der Bodenbearbeitungsmaschine befestigt, beispielsweise mittels Schraubbolzen festgeschraubt oder formschlüssig verriegelt.

Werden mit angebautem Transportfahrwerk Mulden oder Hügel oder allgemein Bodenwellen überfahren, kommt es zu starken Beanspruchungen der Anbauvorrichtung, mit der die Bodenbearbeitungsmaschine am Schlepper angebaut ist, da das Transportfahrwerk der Bodenbearbeitungsmaschine die Bodenwelle nicht gleichzeitig wie die Schlepperräder überfährt. Ist die Bodenbearbeitungsmaschine frontseitig angebaut, überfährt das Transportfahrwerk die Bodenwelle vor den Schlepperrädern, während bei heckseitigem Anbau an den Schlepper das Transportfahrwerk die Bodenwelle nach den Schlepperrädern durchläuft. Je nachdem, ob die Bodenwelle eine Mulde oder ein Hügel ist, treibt das Transportfahrwerk die Bodenbearbeitungsmaschine relativ zum Schlepper nach oben, was zu starken Druckbelastungen des Oberlenkers der Dreipunktanlenkung führt. Fährt das Transportfahrwerk in eine Mulde, kann es den Bodenkontakt verlieren. Umgekehrt, aber prinzipiell analog kommt es zu diesen Erscheinungen auch dann, wenn die Schlepperräder die Bodenwelle überfahren.

Auch wenn große, lange Mulden oder Kuppen überfahren werden und die Schlepperräder und das Transportfahrwerk sich sozusagen gleichzeitig in der Mulde bzw. auf dem Hügel befinden, kommt es zu den genannten Belastungen am Oberlenker bzw. zum Ausheben des Transportfahrwerks. In Mulden bekommt der Oberlenker große Druckkräfte ab, während bei Hügeln das Transportrad vom Boden abgehoben wird.

Um solche Belastungen der Anbauvorrichtung bzw. ein Ausheben des Transportfahrwerks zu vermeiden, wird für den Straßentransport üblicherweise die Anbauvorrichtung zwischen Bodenbearbeitungsmaschine und Schlepper sozusagen nachgiebig gemacht, sodass die Bodenbearbeitungsmaschine relativ zum Schlepper um eine fiktive, liegend quer zur Fahrtrichtung ausgerichtete Achse abknicken kann. Wird als Anbauvorrichtung eine Dreipunktanlenkung mit einem Oberlenker und Unterlenkern verwendet, kann beispielsweise der Oberlenker ausgehängt werden. Um ein solches mühseliges Aushängen zu vermeiden, ist auch schon vorgeschlagen worden, einen Oberlenker zu verwenden, der steuerungstechnisch in Schwimmstellung geschaltet werden kann. Hat der Oberlenker selbst keinen Sperrblock, kann die Schwimmstellung auch schlepperseitig geschaltet werden. Durch ein Aushängen des Oberlenkers bzw. eine schwimmende Längenveränderbarkeit des Oberlenkers kann sich der Anlenkpunkt des Oberlenkers am Anbaubock der Bodenbearbeitungsmaschine auf den Schlepper zu und vom Schlepper weg bewegen, sodass beim Überfahren von Hügeln oder Mulden keine Kräfte im Oberlenker erzeugt werden und das Transportfahrwerk auch nicht ausgehoben wird.

Diese Maßnahmen erfordern jedoch nicht nur einen speziellen Oberlenker, der in Schwimmstellung gebracht werden kann, oder ein mühsames Aushängen, sondern führen auch dazu, dass die Gewichtsverteilung fest vorgegeben ist und beispielsweise über eine gewisse Zugkraft im Oberlenker nicht mehr ausbalancierbar ist, beispielsweise um mehr Gewicht auf die Schlepperräder oder ggf. umgekehrt auch mehr Gewicht auf das Transportfahrwerk der Anbaumaschine zu geben. Zudem ergibt sich bisweilen ein holpriges Fahrverhalten, wenn viel Gewicht auf dem Transportfahrwerk ruht und dieses unebene Fahrbahnabschnitte überfährt.

Der vorliegenden Erfindung liegt hiervon ausgehend die Aufgabe zugrunde, eine verbesserte Bodenbearbeitungsmaschine sowie ein verbessertes Transportfahrwerk zu schaffen, die Nachteile des Standes der Technik vermeiden und letzteren in vorteilhafter Weise weiterbilden. Insbesondere soll ohne aufwändige Maßnahmen an der Anbauvorrichtung zwischen Bodenbearbeitungsmaschine und Schlepper ein stabiles Fahrverhalten im Straßentransport erzielt werden, insbesondere auch wenn unebene Fahrbahnen mit Mulden, Hügeln oder allgemein Bodenwellen überfahren werden.

Erfindungsgemäß wird die genannte Aufgabe durch eine Bodenbearbeitungsmaschine gemäß Anspruch 1 gelöst. Bevorzugte Ausgestaltungen der Erfindung sind Gegenstand der abhängigen Ansprüche.

Es wird also vorgeschlagen, das Transportfahrwerk selbstanpassend auszubilden, um einen Höhenversatz zwischen den Aufstandspunkten des Schleppers und dem Aufstandspunkt des Transportfahrwerks durch Anpassbewegungen des Transportfahrwerks auszugleichen. Das Transportfahrwerk ist relativ zum Korpus der Bodenbearbeitungsmaschine selbsttätig höhenverstellbar, um Bodenwellen, Mulden oder Hügel zu "schlucken", um durch solche Ausgleichsbewegungen des Transportfahrwerks relativ zum Maschinenkorpus übermäßige Beanspruchungen im Bereich der Anbauvorrichtung zwischen Schlepper und Bodenbearbeitungsmaschine, insbesondere übermäßige Druckbelastungen des Oberlenkers und auch ein Ausheben des Transportfahrwerks zu vermeiden.

Erfindungsgemäß ist der Radträger am Anbauträger des Transportfahrwerks höhenbeweglich gelagert, wobei eine Vorspannvorrichtung zum Vorspannen des Radträgers nach unten zum Boden hin vorgesehen ist. Der Radträger und hierdurch das daran montierte, zumindest eine Fahrwerksrad können sich also relativ zum Anbaupunkt des Transportfahrwerks an der Bodenbearbeitungsmaschine unter Überwindung der elastischen Vorspannkräfte der Vorspannvorrichtung auf- und abbewegen, wenn eine Mulde oder Hügel überfahren wird. Hierdurch kann nicht nur ein Abheben des Transportfahrwerks vom Boden vermieden, sondern auch eine gleichmäßige Bodenaufstandskraft des Transportfahrwerks und hierdurch eine gleichmäßige Gewichtsentlastung erzielt werden. Dies kommt einem stabilen Fahrverhalten zugute.

Erfindungsgemäß ist der Radträger als Schwinge ausgebildet, die um eine liegende, quer zur Fahrtrichtung ausgerichtete Schwenkachse schwenkbar aufgehängt ist, sodass die Schwinge relativ zum Anbauträger des Transportfahrwerks auf- und abschwingen bzw. -wippen kann, wodurch das an der Schwinge angelenkte Transportrad auf- und abbewegt wird. Die Schwinge ist dabei unmittelbar an dem Anbauträger schwenkbar gelagert, wobei die Schwenkachse starr bzw. ortsfest am Anbauträger befestigt ist. Hierdurch kann eine stabile und verwindungssteife Aufhängung erzielt werden, wobei gleichzeitig die Schwinge leichtfüßig auf Bodenunebenheiten ansprechen kann, sodass sich insgesamt ein stabiles Fahrverhalten ergibt.

Die genannte Vorspannvorrichtung ist dazu ausgebildet, die Schwinge rotatorisch vorzuspannen bzw. eine Vorspannkraft und/oder ein Vorspannmoment bereitzustellen, die/das die Schwinge auf ihrer das Fahrwerksrad tragenden Seite nach unten zum Boden hin vorzuspannen.

Erfindungsgemäß umfasst die Vorspannvorrichtung ein Federbein, das den Fahrwerksträger in der genannten Weise nach unten spannt. Dabei ist das Federbein von der Schwingenschwenkachse beabstandet einerseits an dem Anbauträger und andererseits an der Schwinge angelenkt sein, um ein Drehmoment bezüglich der Schwingenschwenkachse auf die Schwinge auszuüben.

Vorteilhafterweise kann ein solches Federbein liegend, in Fahrtrichtung weisend ausgerichtet sein, beispielsweise unterhalb der genannten Schwinge angeordnet sein, wobei aber ggf. auch eine Anordnung oberhalb der Schwinge vorgesehen sein kann. Durch eine liegende Anordnung des Federbeins kann auch bei einem großen Verstellweg des Federbeins eine in der Höhe kompakte Bauweise des Transportfahrwerks erzielt werden.

Wird die Vorspannvorrichtung unterhalb der Schwinge angeordnet, kann die Vorspannvorrichtung eine Zugkraft ausüben, was der Knickstabilität der Vorspannvorrichtung zugutekommt. Grundsätzlich ist es aber auch möglich, die Vorspannvorrichtung oberhalb der Schwinge anzuordnen und eine Druckkraft auf die Schwinge auszuüben, um die Schwinge nach unten auf den Boden hin zu spannen.

Die Vorspannvorrichtung ist erfindungsgemäß hydraulisch und/oder pneumatisch arbeitend ausgebildet und umfasst insbesondere einen druckbeaufschlagbaren Hydraulik- und/oder Pneumatikzylinder, der die Vorspannkraft hydraulisch und/oder pneumatisch bereitstellen kann. Grundsätzlich ist es aber auch möglich, einen mechanischen Vorspannmechanismus vorzusehen, insbesondere in Form einer mechanischen Feder wie beispielsweise einer Schraubenfeder und/oder einer Blattfeder und/oder eines Tellerfederpakets. Hierbei kann eine solche mechanische Federeinrichtung auch mit einem hydraulischen oder pneumatischen Vorspannungserzeuger kombiniert werden, beispielsweise dahingehend, dass ein Hydraulik- oder Pneumatikzylinder durch eine Spiralfeder ergänzt wird, die beispielsweise den Kolben der Zylindereinheit gegenüber dem Zylinder beaufschlagen kann.

Die genannte Vorspannvorrichtung, die hydraulisch oder pneumatisch arbeitend ausgebildet ist, umfasst einen Druckspeicher, um den Druck bzw. das Druckmittel bereitzustellen. Hierdurch kann die Vorspannvorrichtung autark arbeiten, ohne dass eine Druckversorgung vom Schlepper her notwendig wäre, welche natürlich gleichwohl vorgesehen sein kann, beispielsweise zum Befüllen des genannten Druckspeichers.

In vorteilhafter Weiterbildung der Erfindung ist eine Einstellvorrichtung zum Einstellen der Vorspannkraft der Vorspannvorrichtung und/oder Federhärte der Vorspannvorrichtung vorgesehen, um die vom Transportfahrwerk aufgefangene Stützlast variabel einstellen und hierdurch die Gewichtsverteilung in der gewünschten Weise ausbalancieren zu können. Durch Verstellen der Federhärte kann auch eine wahlweise straffere oder nachgiebigere Abstimmung des Transportfahrwerks vorgesehen werden, beispielsweise um je nach Fahrbahnbeschaffenheit eine höhere Fahrstabilität oder auch eine schonendere Abstützung zu erzielen.

Dabei kann die genannte Einstellvorrichtung vorteilhafterweise das Druckniveau verstellen. Beispielsweise kann ein einstellbarer Druckspeicher Verwendung finden, mithilfe dessen das Druckniveau, das auf den Druckmittelzylinder bzw. den Druckmittelaktor wirkt, in gewünschter Weise eingestellt werden kann.

Ist ein mechanischer Vorspannmechanismus vorgesehen, kann die Einstellvorrichtung beispielsweise eine Ergänzungsfeder zuschalten oder abschalten oder eine mechanische Feder mit entsprechender Federkennlinie mehr oder weniger vorspannen, um das Vorspannniveau und hierdurch die vom Transportfahrwerk erzielte Stützkraft in gewünschter Weise einzustellen.

Um das Fahrverhalten weiter zu stabilisieren, insbesondere ein Hoppeln zu vermeiden, kann dem höhenverstellbar gelagerten Fahrwerksträger auch eine Dämpfungseinrichtung zugeordnet sein, wobei eine solche Dämpfungseinrichtung vorteilhafterweise in die Vorspannvorrichtung integriert sein kann. Beispielsweise kann der hydraulisch oder pneumatisch arbeitende Vorspannzylinder gleichzeitig einen Dämpfer bilden, beispielsweise durch Beschränkung des Volumenstroms des bei einer Verstellbewegung zu verdrängenden Volumenstroms. Ein solcher Dämpfer kann Bewegungsenergie, die durch Auf- und/oder Abwärtsbewegungen des Fahrwerksträgers erzeugt wird, dissipativ abbauen.

Der Anbauträger des Transportfahrwerks weist lösbare Befestigungsmittel zum lösbaren, starren Befestigen an der Bodenbearbeitungsmaschine auf. Beispielsweise können solchen lösbaren Befestigungsmittel einen formschlüssigen, werkzeugfrei betätigbaren Verriegelungsmechanismus aufweisen, mithilfe dessen der Anbauträger formschlüssig am Korpus der Bodenbearbeitungsmaschine verriegelt werden kann.

Gemäß der Erfindung ist das zumindest eine Fahrwerksrad des Transportfahrwerks einlenkbar ausgebildet, um bei Kurvenfahrten ein Radieren des Rads zu vermeiden. Dabei trägt die genannte Schwinge eine aufrechte Einlenk- bzw. Steuerachse, um die das Fahrwerksrad relativ zur Schwinge einlenken kann.

Um ein leichtfüßiges Einlenken zu ermöglichen, wird der einlenkbare Teil der Radaufhängung vom Gewicht der Vorspannvorrichtung freigehalten, so dass der einlenkbare Teil der Radaufhängung selbst leichtgewichtig sein und eine geringe Trägheit aufweisen kann. Die Vorspannvorrichtung einschließlich deren Federbein bzw. deren Hydraulikzylinder und Druckspeicher ist insbesondere zwischen Schwinge und Anbauträger und somit nicht am einlenkbaren Teil der Radaufhängung angebracht.

Um einen einfachen Ab- und Anbau des Transportfahrwerks zu ermöglichen, ist die genannte Vorspannvorrichtung Teil des Transportfahrwerks und bildet zusammen mit dem Transportfahrwerk eine vormontierte Montagebaugruppe, die als Ganzes am Maschinenrahmen des Bodenbearbeitungsgeräts angebaut und davon abgebaut werden kann. Vorteilhafterweise kann die Vorspannvorrichtung, zumindest wesentliche Teile davon wie Druckmittelzylinder und Druckmittelspeicher an dem Anbauträger montiert sein, um auch das einfedernde Gewicht der Schwinge zu reduzieren.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Darstellung eines Transportfahrwerks nach einer vorteilhaften Ausführung der Erfindung, das an den nur ausschnittsweise dargestellten Rest der Bodenbearbeitungsmaschine bzw. deren Maschinenrahmen angebaut ist, wobei der als Schwinge ausgebildete Radträger und die als Federbein ausgebildete Vorspannvorrichtung zu sehen sind, und
- Fig. 2:: eine Seitenansicht auf das an die Bodenbearbeitungsmaschine montierte Transportfahrwerk in einer Blickrichtung parallel zur Schwingenschwenkachse des Radträgers.

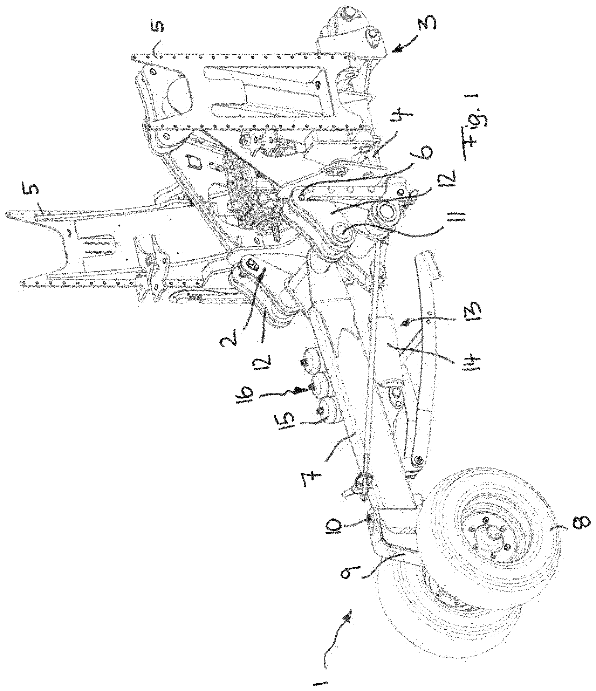

Wie die Figuren zeigen, umfasst das Transportfahrwerk 1 einen Anbauträger 2, der starr bzw. ortsfest an der nur ausschnittsweise dargestellten Bodenbearbeitungsmaschine 3 befestigt werden kann, beispielsweise an deren Maschinenrahmen 4, der Arbeitsaggregate der Bodenbearbeitungsmaschine 4 tragen kann, welche beispielsweise an klappbaren Maschinen- bzw. Seitenflügeln 5 vorgesehen sein können, die zwischen einer abgesenkten Arbeitsstellung und einer die Maschinenbreite verringernden Transportstellung, insbesondere einer aufrechten Transportstellung verstellt werden können. Der genannte Anbauträger 2 kann beispielsweise an einem zentralen Teil des Maschinenrahmens 4 befestigt sein, der ggf. ein Verteilergetriebe eines Antriebsstrangs zum Antreiben von Arbeitswerkzeugen wie Eggenzinken tragen kann, vgl. Fig. 1.

Der Anbauträger 2 ist durch lösbare Befestigungsmittel 6 starr am Maschinenrahmen 4 lösbar befestigt, um in an sich bekannter Weise das Transportfahrwerk 1 für den Arbeitsbetrieb bzw. die Feldbearbeitung abbauen und am Feldrand lagern zu können, bzw. umgekehrt für den Straßentransport anmontieren zu können. Um den An- und Abbau einfach zu gestalten, können die lösbaren Befestigungsmittel 6 vorteilhafterweise formschlüssige, werkzeugfrei betätigbare Verriegelungsmittel umfassen, beispielsweise in Form eines beweglichen Verriegelungsmauls, wobei aber auch andere Haltemittel wie beispielsweise Steckbolzen und dergleichen möglich sind.

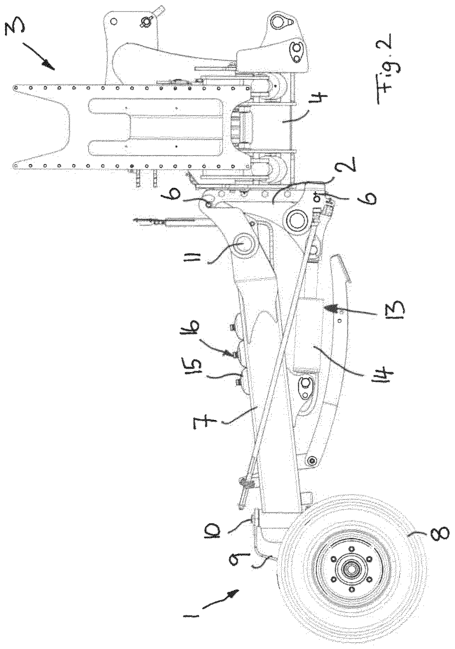

Wie die Figuren zeigen, ist an dem Anbauträger 2 ein Radträger 7 aufgehängt, der zumindest ein Fahrwerksrad 8 trägt, wobei auch zwei oder mehr Fahrwerksräder vorgesehen sein können, beispielsweise in Form eines Zwillings-Radpaares, vgl. Figur 1 und Figur 2.

Das zumindest eine Fahrwerksrad 8 kann an dem Radträger 7 lenkbar montiert bzw. aufgehängt sein und beispielsweise ein Nachlaufrad bilden. Wie die Figuren zeigen, kann ein lenkbarer Radachsträger 9, an dem die liegende Radachse befestigt ist, um eine aufrechte Steuer- bzw. Lenkachse 10 schwenkbar am Radträger 7 gelagert sein, sodass das Fahrwerksrad 8 gegenüber dem Radträger 7 und damit gegenüber dem Maschinenrahmen 4 der Bodenbearbeitungsmaschine 3 einlenken kann, um bei Kurvenfahrten nicht zu radieren. Alternativ oder zusätzlich wäre es auch möglich, den Radträger 7 um eine aufrechte Achse einlenkbar am Anbauträger 2 zu lagern.

Um Bodenwellen ausgleichen zu können, ist der genannte Radträger 7 höhenverstellbar an dem Anbauträger 2 aufgehängt, sodass das zumindest eine Fahrwerksrad 8 Höhenbewegungen relativ zum Anbauträger 2 und damit relativ zum Maschinenrahmen 4 der Bodenbearbeitungsmaschine 3 ausführen kann.

Der genannte Radträger 7 ist als Schwinge ausgebildet, die um eine liegende, quer zur Fahrtrichtung ausgerichtete Schwingenschwenkachse 11 schwenkbar an dem Anbauträger 2 gelagert sein kann. Die Schwingenschwenkachse 11 kann dabei vorteilhafterweise starr an dem Anbauträger 2 festgelegt sein, beispielsweise mittels zweier beabstandeter Achsträgerkonsolen 12, die starr am Korpus des Anbauträgers 2 befestigt sein können, um eine insgesamt verwindungssteife Aufhängung des Radträgers 7 zu erzielen.

Die Auf- und Abbewegungen der genannten Schwinge werden dabei von einer Vorspannvorrichtung 13 gesteuert bzw. beeinflusst, die den Radträger 7 und damit das zumindest eine Fahrwerksrad 8 nach unten zum Boden hin vorspannt.

Die genannte Vorspannvorrichtung 13 ist hydraulisch oder pneumatisch arbeitend ausgebildet und umfasst insbesondere einen Druckmittelzylinder 14, der von der Schwingenschwenkachse 11 beabstandet einerseits an dem Anbauträger 2 und andererseits an dem Radträger 7 angelenkt bzw. gelenkig abgestützt sein kann, um den Radträger 7 mit einem Drehmoment bzw. einer rotatorisch auf die Schwinge wirkenden Vorspannkraft zu beaufschlagen.

Vorteilhafterweise kann der genannte Druckmittelzylinder 14 liegend in Fahrtrichtung weisend angeordnet sein, vorzugsweise unterhalb des als Schwinge ausgebildeten Radträgers 7, vgl. Figur 1 und Figur 2. Hierdurch kann eine insgesamt flachbauende, platzsparende Anordnung erzielt werden, die nichtsdestotrotz einen großen Verstellweg für den Druckmittelzylinder 14 zulässt. Dabei kann der Druckmittelzylinder 14 eine Zugkraft bereitstellen, um den Radträger 7 nach unten zum Boden hin vorzuspannen, sodass sich ohne Knicksteifigkeitsprobleme eine leicht bauende Ausbildung des Druckmittelzylinders 14 realisieren lässt.

Der genannte Druckmittelzylinder 14 bildet ein hydraulisches bzw. pneumatisches Federbein, das durch Längenveränderung Höhenverstellbewegungen des Radträgers 7 zulässt, letzteren dabei aber gleichzeitig mit einer Vorspannkraft beaufschlagt.

Wie die Figuren 1 und 2 zeigen, kann der Druckmittelzylinder 14 aus einem oder mehreren Druckspeichern 15 mit unter Druck stehendem Druckmittel beaufschlagt werden, wobei die genannten Druckspeicher 15 beispielsweise an dem Radträger 7 befestigt sein können.

Mittels der genannten Druckspeicher kann das Transportfahrwerk 1 autark arbeiten und ist nicht auf eine Druckversorgung vom Schlepper her angewiesen, welche nichtsdestotrotz vorgesehen sein kann.

Vorteilhafterweise können die Druckspeicher 15 einstellbar ausgebildet sein, um das Druckniveau variabel einstellen und hierdurch die Stützkraft des Transportfahrwerks 1 einstellen zu können.

Der oder die Druckspeicher 15 können Druckanschlüsse zum Anschließen an die Druckversorgung des Schleppers aufweisen, beispielsweise um die Druckspeicher befüllen und/oder das Druckniveau im Druckspeicher verändern zu können.

Solche einstellbaren Druckspeicher 15 bilden eine Einstellvorrichtung 16 zum Einstellen der Vorspannkraft der Vorspannvorrichtung 13.

Ist das Transportfahrwerk 1 an der Bodenbearbeitungsmaschine 3 montiert, kann das Transportfahrwerk 1 durch Absenken des Maschinenrahmens 4 vorgespannt werden, sodass eine definierte Last am Fahrwerksrad 8 abgefangen wird. Fährt dann beim Straßentransport - oder auch noch auf dem Feld - das Fahrwerksrad 8 in eine Mulde ein, federt der Druckmittelzylinder 14 weiter ein, sodass der Radträger 7 nach unten fährt. Umgekehrt gibt der Radträger 7 nach oben nach, wenn eine Bodenwelle überfahren wird, wobei hierdurch der vorgespannte Druckmittelzylinder 14 ein Stück weit ausfährt, wie dies aus Figur 1 ersichtlich ist.

Durch die beschriebene höhenbewegliche Aufhängung des Fahrwerksrades 2 wird nicht nur ein hoher Fahrkomfort und ein stabiles Fahrverhalten erreicht, wobei das Transportfahrwerk 1 weder abhebt noch in der Anlenkung zum Schlepper hin übermäßige Kräfte impliziert. Gleichzeitig ist dabei auch kein spezieller Oberlenker erforderlich, der auf Schwimmstellung geschaltet werden könnte, oder gar abgekoppelt werden müsste, um beim Durchfahren von Mulden oder Überfahren von Kuppen die beschriebenen Belastungen und Störungen zu vermeiden. Gleichzeitig kann durch die einstellbare Vorspannkraft der Vorspannvorrichtung 13 die Stützlast vom Fahrwerksrad 8 in gewünschter Weise eingestellt werden, wodurch die Gewichtsverteilung ausbalanciert und insbesondere auch auf verschiedene Untergründe angepasst werden kann.

## Patentansprüche

1. Landwirtschaftliche Bodenbearbeitungs-, insbesondere Sämaschine, mit einem Transportfahrwerk für den Straßentransport, das einen Anbauträger (2) zum Anbau an die Bodenbearbeitungsmaschine (3), sowie zumindest einen Radträger (7) aufweist, der zumindest ein Fahrwerksrad (8) trägt und der Radträger (7) an dem Anbauträger (2) höhenbeweglich gelagert ist, wobei eine Vorspannvorrichtung (13) zum Vorspannen des Radträgers (7) nach unten zum Boden hin vorgesehen ist, wobei der Radträger (7) als Schwinge ausgebildet ist, die um eine liegende, quer zur Fahrtrichtung ausgerichtete Schwingenschwenkachse (11) schwenkbar am Anbauträger (2) aufgehängt ist, wobei die Vorspannvorrichtung (13) dazu ausgebildet ist, die Schwinge rotatorisch vorzuspannen und zumindest ein hydraulisches oder pneumatisches Federbein, das beabstandet von der Schwingenschwenkachse (11) einerseits an der Schwinge und andererseits an dem Anbauträger (2) gelenkig abgestützt ist, und einen Druckspeicher (15) zum Beaufschlagen des Federbeins mit Druckmittel unabhängig von einer Schlepperdruckmittelversorgung aufweist, **dadurch gekennzeichnet dass** der Anbauträger (2) lösbare Befestigungsmittel zum lösbaren, starren Befestigen des Transportfahrwerks an einem Maschinenrahmen (4), an dem Bodenbearbeitungswerkzeuge aufgehängt sind, und zum Abbau des Transportfahrwerks zur Feldbearbeitung aufweist, wobei das zumindest eine Fahrwerksrad (8) um eine aufrechte Steuerachse (10) einlenkbar an der vorgespannten, wippbaren Schwinge aufgehängt ist, die die genannte Steuerachse (10) trägt, wobei die Vorspannvorrichtung (13) einschließlich Federbein (14) und Druckspeicher (15) zwischen Schwinge und Anbauträger und somit nicht am einlenkbaren Teil der Radaufhängung angebracht ist und zusammen mit dem Transportfahrwerk (1) eine Montagebaugruppe bilden, die durch Lösen der Befestigungsmittel des Anbauträgers (2) zusammen als Einheit vom Maschinenrahmen abbaubar ist.

2. Landwirtschaftliche Bodenbearbeitungsmaschine nach dem vorhergehenden Anspruch, wobei das Federbein der Vorspannvorrichtung (13) liegend in Fahrtrichtung ausgerichtet und unterhalb der Schwinge angeordnet ist und die Schwinge mit einer Zugkraft beaufschlagt.

3. Landwirtschaftliche Bodenbearbeitungsmaschine nach einem der vorhergehenden Ansprüche, wobei eine Einstellvorrichtung (16) zum Einstellen der Vorspannkraft und der Federhärte der Vorspannvorrichtung (13) vorgesehen ist.

4. Landwirtschaftliche Bodenbearbeitungsmaschine nach einem der vorhergehenden Ansprüche, wobei der zumindest eine Druckspeicher (15) hinsichtlich seines Druckniveaus einstellbar ausgebildet und zum Einstellen der Vorspannkraft der Vorspannvorrichtung (13) verstellbar ist.

5. Landwirtschaftliche Bodenbearbeitungsmaschine nach einem der vorhergehenden Ansprüche, wobei eine Dämpfungseinrichtung zum Dämpfen von Höhenbewegungen des Radträgers (7) vorgesehen, insbesondere in die Vorspannvorrichtung (13) integriert ist.

6. Landwirtschaftliche Bodenbearbeitungsmaschine nach dem vorhergehenden Anspruch, wobei die lösbaren Befestigungsmittel (6) einen formschlüssigen, werkzeugfrei betätigbaren Verriegelungsmechanismus aufweisen.

## Claims

1. Agricultural soil working machine, in particular a sower, comprising a transport chassis for road transport, which comprises an attachment carrier (2) for attachment to the soil working machine (3), and at least one wheel carrier (7), which carries at least one chassis wheel (8), and the wheel carrier (7) is mounted on the attachment carrier (2) so as to be vertically movable, wherein a preload device (13) is provided for preloading the wheel carrier (7) downwards towards the ground, wherein the wheel carrier (7) is configured as a swingarm, which is suspended so as to be pivotable on the attachment carrier (2) about a horizontal swingarm pivot axis (11) oriented transversely to the travel direction, wherein the preload device (13) is configured to rotationally preload the swingarm, and comprises at least one hydraulic or pneumatic suspension strut, which is supported in a hinged manner on the swingarm at one end and on the attachment carrier (2) at the other end so as to be spaced apart from the swingarm pivot axis (11), and a pressure accumulator (15) for applying pressure medium to the suspension strut independently of a tractor pressure medium supply, **characterised in that** the attachment carrier (2) comprises detachable fastening means for detachably, rigidly fastening the transport chassis to a machine frame (4), from which soil working tools are suspended, and for dismounting the transport chassis for working fields, wherein the at least one chassis wheel (8) is suspended from the preloaded, tiltable swingarm such that it can be steered about an upright control shaft (10), which swingarm carries said control shaft (10), wherein the preload device (13) including the suspension strut (14) and the pressure accumulator (15) is attached between the swingarm and the attachment carrier and thus not to the steerable part of the wheel suspension, and together with the transport chassis (1) forms an assembly, which can be dismounted from the machine frame together as a unit by detaching the fastening means of the attachment carrier (2).

2. Agricultural soil working machine according to the preceding claim, wherein the suspension strut of the preload device (13) is oriented horizontally in the travel direction and is arranged below the swingarm, and a tensile force is applied to the swingarm.

3. Agricultural soil working machine according to any of the preceding claims, wherein a setting device (16) is provided for setting the preload force and the spring stiffness of the preload device (13).

4. Agricultural soil working machine according to any of the preceding claims, wherein the at least one pressure accumulator (15) is configured to be settable in its pressure level and is adjustable in order to set the preload force of the preload device (13).

5. Agricultural soil working machine according to any of the preceding claims, wherein a damping apparatus is provided for damping vertical movements of the wheel carrier (7), and is in particular integrated in the preload device (13).

6. Agricultural soil working machine according to the preceding claim, wherein the detachable fastening means (6) comprise a form-fit locking mechanism that can be actuated without tools.

## Revendications

1. Machine de travail du sol agricole, en particulier semoir, avec un châssis de transport pour le transport routier, qui présente un support rapporté (2) destiné à être monté sur la machine de travail du sol (3), ainsi qu'au moins un porte-roue (7), qui supporte au moins une roue de châssis (8) et qui (7) est monté de manière mobile en hauteur sur le support rapporté (2), dans laquelle un dispositif de précontrainte (13) est prévu pour précontrainte le porte-roue (7) vers le bas en direction du sol, dans laquelle le porte-roue (7) est réalisé en tant que bras oscillant, qui est suspendu sur le support rapporté (2) de manière à pouvoir pivoter autour d'un axe de pivotement oscillant (11) horizontal orienté de manière transversale par rapport à la direction de déplacement, dans laquelle le dispositif de précontrainte (13) est réalisé pour précontraindre en rotation le bras oscillant et présente au moins une jambe de suspension hydraulique ou pneumatique, qui est en appui d'une part sur le bras oscillant à distance de l'axe de pivotement de bras oscillant (11) et d'autre part de manière articulée sur le support rapporté (2), et un accumulateur de pression (15) destiné à soumettre la jambe de suspension à l'action d'un fluide sous pression indépendamment de l'alimentation en fluide sous pression de tracteur, **caractérisée en ce que** le support rapporté (2) présente des moyens de fixation pouvant être desserrés destinés à fixer de manière desserrable, de manière rigide le châssis de transport sur un bâti de machine (4), sur lequel des outils de travail du sol sont suspendus, et destinés à démonter le châssis de transport pour le travail du champ, dans laquelle l'au moins une roue de châssis (8) est suspendue sur le bras oscillant précontraint basculant pouvant être dirigé autour d'un axe de commande droit (10), qui supporte ledit axe de commande (10), dans laquelle le dispositif de précontrainte (13), y compris la jambe de suspension (14) et l'accumulateur de pression (15) peut être installé entre le bas oscillant et le support rapporté et pas ainsi sur la partie pouvant être dirigée de la suspension de roue et forment conjointement avec le châssis de transport (1) un module de montage, qui peut être démonté conjointement en tant qu'unité du bâti de machine en desserrant les moyens de fixation du support rapporté (2).

2. Machine de travail du sol agricole selon la revendication précédente, dans laquelle la jambe de suspension du dispositif de précontrainte (13) est orientée de manière horizontale dans la direction de déplacement et est disposée sous le bras oscillant et soumet le bras oscillant à l'action d'une force de traction.

3. Machine de travail du sol selon l'une quelconque des revendications précédentes, dans laquelle un dispositif de réglage (16) est prévu pour régler la force de précontrainte et la dureté de suspension du dispositif de précontrainte (13).

4. Machine de travail du sol agricole selon l'une quelconque des revendications précédentes, dans laquelle l'au moins un accumulateur de pression (15) est réalisé de manière à pouvoir être réglé quant à son niveau de pression et peut être ajusté pour régler la force de précontrainte du dispositif de précontrainte (13).

5. Machine de travail du sol agricole selon l'une quelconque des revendications précédentes, dans laquelle un système d'amortissement est prévu pour amortir des déplacements en hauteur du porte-roue (7), en particulier est intégré dans le dispositif de précontrainte (13).

6. Machine de travail du sol agricole selon la revendication précédente, dans laquelle les moyens de fixation (6) pouvant être desserrés présentent un mécanisme de verrouillage à complémentarité de forme pouvant être actionné sans outil.
